# EUROPEAN PATENT SPECIFICATION

(11) **EP 2 070 727 B1**
(45) Date of publication and mention of the grant of the patent: **20.04.2011**
(21) Application number: 08170785.3
(22) Date of filing: 05.12.2008
(51) Int. Cl.: B60C 1/00

(54) **Tire with innerliner containing low melting polyamide**
Reifen mit Innenauskleidung mit Polyamid mit niedrigem Schmelzpunkt
Pneu avec garniture contenant un polyamide à faible fusion

(30) Priority: 15.12.2007 US 957423
(43) Date of publication of application: 17.06.2009
(73) Proprietor: The Goodyear Tire & Rubber Company, Akron, OH 44316-0001 (US)
(72) Inventor: Zhao, Junling, Hudson, OH 44236 (US); Puhala, Aaron Scott, Kent, OH 44240 (US); Beers, Rober Neil, Uniontown, OH 44685 (US); Hahn, Bruce Raymond, Hudson, OH 44236 (US); Feher, Frank James, Copley, OH 44321 (US)
(74) Representative: Kutsch, Bernd

(56) References cited:
- EP-A- 0 723 883
- EP-A- 0 969 039
- EP-A- 1 484 525
- EP-A- 1 580 232
- WO-A-2007/050061
- WO-A-2007/050076

## Description

### Background of the Invention

A pneumatic rubber tire is conventionally of a toroidal shape and comprises a carcass with a cavity in which its closure is typically completed with a rigid rim onto which the tire is to be mounted.

The inner surface of a pneumatic tire, namely a surface of said cavity which is usually referred to as an "innerliner" is typically a rubber layer composed of an elastomeric composition designed to prevent, or retard, the permeation of air and moisture into the tire carcass from the aforesaid cavity which becomes the tire's inner air chamber. Such tire innerliners, or innerliner rubber layers, are well known to those having skill in such art.

Butyl rubber is typically relatively impermeable to air and moisture and is often used as a major portion of the tire innerliner composition and can be in a form of butyl rubber or halobutyl rubber such as, for example, bromobutyl rubber. For example, see US-A- 3,808,177. Butyl rubber is an isobutylene copolymer with a small amount of isoprene which typically contains only from 0.5 to 5 weight percent units derived from isoprene.

Halobutyl and butyl rubbers are usually one of the most expensive elastomers used in a tire. Given the competitive tire market and the continued need to lower the cost of manufacturing tires, there exists a desire to decrease the cost of innerliners while maintaining their performance.

In the description of the invention, the term "phr" relates to parts by weight of a particular ingredient per 100 parts by weight of rubber contained in a rubber composition. The terms "rubber" and "elastomer" are used interchangeably unless otherwise indicated, the terms "cure" and "vulcanize" may be used interchangeably unless otherwise indicated and the terms "rubber composition" and "rubber compound" may be used interchangeably unless otherwise indicated. The term "butyl type rubber" is used herein to refer to butyl rubber (copolymer of isobutylene with a minor amount comprised of, for example 1 to 3 percent, of units derived from isoprene), and halobutyl rubber as chlorobutyl rubber and bromobutyl rubber (chlorinated and brominated butyl rubber, respectively) unless otherwise indicated.

Document WO-A-2007/050061 discloses the features of the preamble of claim 1.

### Summary of the Invention

The present invention is directed to a pneumatic tire according to claim 1. Dependent claims refer to preferred embodiments of the invention.

### Description of the Invention

The present invention is directed to a pneumatic tire comprising a carcass and an innerliner, the innerliner comprising a rubber composition comprising:
100 parts by weight of at least one elastomer; and
from 1 to 50 parts by weight, per 100 parts by weight of elastomer (phr) of a polyamide having a melting temperature of less than 160°C;
wherein the elastomer exists as a continuous phase and the polyamide is dipersed as a discontinuous phase in the elastomeric continuous phase, and the innerliner is co-vulcanized with the carcass.

It has been found unexpectedly that an inclusion in the tire innerliner rubber composition of a disperse phase of a low melting polyamide, or nylon, results in an innerliner having high resistance to permeability with acceptable green strength for tire building.

The low melting polyamide is present in the rubber composition of the innerliner as a disperse phase, with the polyamide dispersed in an elastomeric continuous phase. This is in direct contrast to another composition for an innerliner, wherein a polyamide exists as the continuous phase, with a disperse elastomeric phase.

The present innerliner is obtained by conventional rubber mixing and calendaring to form the green innerliner, followed by tire build and vulcanization. Dynamic vulcanization is not utilized in the present invention. By contrast, to obtain an innerliner composition with a continuous polyamide phase and disperse elastomeric phase, dynamic vulcanization would be used. In such a dynamically vulcanized innerliner, dispersion of the elastomeric phase in the continuous polyamide phase is obtained by vulcanization of the elastomeric phase containing curatives during high temperature extrusion mixing with the polyamide; as the elastomer cures the shear induced by mixing causes the elastomer to form small particulates dispersed in the polyamide. See for example Tracey, D. S., and A. H.Tsou, Dynamically Vulcanized Alloy Innerliners, Rubber World, September 2007, pp 17-21.

By contrast and of particular interest in the present invention, in the innerliner of the present invention, the polyamide is dispersed in a continuous elastomeric phase. Such a dispersion of the polyamide in a continuous elastomeric phase is obtained by mixing of the polyamide with the elastomer without curatives in an initial, so-called non-productive mix step to obtain the two-phase mixture. This is followed by addition and mixing of curatives in a productive mix step.

The rubber composition for use in the innerliner of the present invention include an elastomer. Suitable elastomers include butyl type rubber, including butyl rubber halobutyl rubbers such as chlorobutyl rubber and bromobutyl rubber, copolymers of isobutylene and paramethylstyrene, and brominated copolymers of isobutylene and paramethylstyrene. Other suitable elastomers include synthetic polyisoprene, natural rubber, styrene butadiene rubber, and polybutadiene.

An alternative butyl rubber for the innerliner comprises a brominated copolymer of isobutylene and paramethylstyrene. The brominated copolymer conventionally contains from 0.3 to 2 weight percent bromination. Exemplary of such a brominated copolymer is Exxpro® from ExxonMobil Chemical reportedly having a Mooney (ML 1+8) viscosity at 125 °C of from 45 to 55, a paramethylstyrene content of 5 weight percent, isobutylene content of 94 to 95 weight percent, and a bromine content of 0.8 weight percent. Alternately, the butyl rubber may comprise a combination of a copolymer of isobutylene and isoprene together with a brominated copolymer of isobutylene and paramethylstyrene.

The rubber composition for use in the innerliner also includes a low melting point polyamide, or nylon. By low melting point polyamide, it is meant that the polyamide exhibits a relatively low melting temperature, sufficiently low to ensure melting and dispersion of the polyamide at temperatures used to mix the innerliner rubber composition, typically 160 to 180°C or less. In one embodiment, the polyamide has a melting point temperature of less than 160°C as determined by ASTM D3418. In one embodiment, the polyamide has a melting point temperature of less than 140°C as determined by ASTM D3418. In one embodiment, the polyamide has a melting point temperature of less than 120°C as determined by ASTM D3418.

Suitable low melting point polyamides include various nylon copolymers, terpolymers and multipolymers including nylon 6/66/610, nylon 6/66/612, nylon 6/66/610/612, and the like. The melting point of such polyamides is dependent on the relative proportions of the monomers used in the production of the polyamide, as described for example in US-A- 2,388,035.

Suitable low melting point polyamides are available commercially as the Elvamide® series from DuPont, including Elvamide® 8061, 8063, 8066, and 8023R.

In addition to the aforesaid elastomers and low melting polyamide, for the tire innerliner, the innerliner rubber composition may also contain other conventional ingredients commonly used in rubber vulcanizates, for example, tackifier resins, processing aids, carbon black, silica, talc, clay, mica, antioxidants, antiozonants, stearic acid, activators, waxes and oils as may be desired. Carbon black and/or silica may be used in a range, for example, of from 20 to 60 phr. The said integral innerliner may contain, for example, at least one of talc, clay, mica and calcium carbonate, and their mixtures, in a range, for example, of 2 to 25 phr depending upon various physical properties desired for the innerliner composition. Typical amounts of processing aids may, for example, range from 1 to 15 phr.

The vulcanization of the compound for use as an innerliner is conducted in the presence of a sulfur vulcanizing agent. Examples of suitable sulfur vulcanizing agents include elemental sulfur (free sulfur) or sulfur donating vulcanizing agents, for example, an amine disulfide, polymeric disulfide or sulfur olefin adducts. Preferably, the sulfur vulcanizing agent is elemental sulfur. As known to those skilled in the art, sulfur vulcanizing agents are used in an amount ranging from 0.2 to 5.0 phr with a range of from 0.5 to 3.0 being preferred.

Accelerators are used to control the time and/or temperature required for vulcanization and to improve the properties of the vulcanizate. A single accelerator system may be used, i.e., primary accelerator in conventional amounts ranging from 0.5 to 3.0 phr. In the alternative, combinations of 2 or more accelerators may be used which may consist of a primary accelerator which is generally used in the larger amount (0.3 to 3.0 phr), and a secondary accelerator which is generally used in smaller amounts (0.05 to 1.0 phr) in order to activate and to improve the properties of the vulcanizate. In addition, delayed action accelerators may be used which are not effected by normal processing temperatures but produce satisfactory cures at ordinary vulcanization temperatures. Suitable types of accelerators that may be used are amines, disulfides, guanidines, thioureas, thiazoles, thiurams, sulfenamides, dithiocarbamate and xanthates. Preferably, the primary accelerator is a disulfide or sulfenamide.

Various synthetic, amorphous silicas may be used for the tire innerliner composition, where it is desired that the innerliner composition contains a silica. Representative of such silicas are, for example and not intended to be limiting, precipitated silicas as, for example, HiSil 210™ and HiSil 243™ from PPG Industries, as well as various precipitated silicas from J.M. Huber Company, various precipitated silicas from Degussa Company and various precipitated silicas from Rhodia Company.

Various coupling agents may be used for the various synthetic, amorphous silicas, particularly the precipitated silicas, to couple the silica aggregates to various of the elastomers. Representative of such coupling agents are, for example and not intended to be limiting, bis(3-trialkoxysilylpropyl) polysulfides wherein at least two, and optionally all three, of its alkoxy groups are ethoxy groups and its polysulfidic bridge comprises an average of from 2 to 4, alternatively from 2 to 2.6 or an average of from 3.4 to 3.8 connecting sulfur atoms, and an alkoxyorganomercaptosilane which may optionally have its mercpto moiety blocked with a suitable blocking agent during the mixing thereof with the rubber composition, wherein said alkoxy group is preferably an ethoxy group.

The rubber composition may also include a material that acts as a compatibilizer between the continuous elastomeric phase and the disperse polyamide phase. Suitable compatibilizers include phenol resins combined with metal salt catalysts. In one embodiment, the compatibilizer is a methylphenol resin and stannous chloride. Other suitable compatibilizers include methylene donor/methylene acceptor pairs. In one embodiment, the methylene donor/methylene acceptor-type compatibilizer is resorcinol and hexamethylenetetramine.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s).

In practice the innerliner rubber composition, or compound, is formed into a gum strip. As known to those skilled in the art, a gum strip is produced by a press or passing a rubber compound through a mill, calender, multi-head extruder or other suitable means. Preferably, the gum strip is produced by a calender because greater uniformity is believed to be provided. The uncured gum strip is then constructed as an inner surface (exposed inside surface) of an uncured rubber tire structure, also known as the carcass. The innerliner is then sulfur co-cured with the tire carcass during the tire curing operation under conditions of heat and pressure.

Vulcanization of the tire of the present invention is generally carried out, for example, at temperatures of between about 100°C and 200°C. Preferably, the vulcanization is conducted at temperatures ranging from about 110°C to 180°C. Any of the usual vulcanization processes may be used such as heating in a press or mold, heating with superheated steam or hot salt or in a salt bath. Preferably, the heating is accomplished in a press or mold in a method known to those skilled in the art of tire curing.

As a result of this vulcanization, the innerliner becomes an integral part of the tire by being co-cured therewith.

Therefore, in practice, the innerliner may, for example, be first constructed as an inner surface of an uncured rubber tire as an uncured compounded rubber gum strip and is then co-cured with the tire during a tire curing operation wherein the said rubber gum strip may have, for example, a thickness in the range of 0.04 to 1, alternately in a range of from 0.05 to 0.5, centimeters, depending somewhat the type, size and intended use of the tire.

The pneumatic tire with the integral innerliner may be constructed in the form of a passenger tire, truck tire, or other type of bias or radial pneumatic tire.

The following examples are presented in order to illustrate the present invention. The parts and percentages are by weight unless otherwise noted.

### Example 1

In this example, the effect of dispersing a low melting polyamide in a butyl rubber innerliner composition is illustrated. All amounts are in parts by weight. The rubber compositions were mixed using a two phase mixing procedure, with addition of the elastomers and polyamide in a first, non-productive mix step, followed by addition of conventional amounts of curatives in a second, productive mix step, to obtain a compound with a disperse polyamide phase in a continuous elastomer phase.

The mixed compound was formed into a sheet and cured at 170°C for 20 minutes. Cured samples were then tested for permeability. Compound recipes and relative permeabilities are shown in Table 1.

**Table 1**

| ***Sample No.*** | **1** | **2** | **3** | **4** |
|---|---|---|---|---|
| BIMS Rubber¹ | 100 | 60 | 60 | 60 |
| Carbon Black | 57.5 | 0 | 0 | 0 |
| Polyamide² | 0 | 40 | 40 | 40 |
| Methylphenol Resin | 0 | 0 | 20 | 20 |
| Stannous Chloride | 0 | 0 | 0 | 0.8 |
| Relative Permeability³ | 100 | 37 | 31 | 25 |

| | | | | |
|---|---|---|---|---|
| ¹Brominated isobutylene-co-paramethylstyrene from ExxonMobil ² Elvamide® 8066 from DuPont, melting temperature reported as 115°C by ASTM D3418. ³ Normalized to Sample 1, i.e. relative permeability = actual permeability/sample 1 value x 100; lower value is desired. | | | | |

As seen in Table 1, the presence of the polyamide as a disperse phase in the elastomeric phase results in an unexpectedly lower permeability as compared to a conventional butyl rubber compound.

### Example 2

In this example, the effect of dispersing a low melting polyamide in an innerliner compound containing butyl rubber and synthetic polyisoprene is illustrated. The compound was formed, cured and tested following the procedures of Example 1.

**Table 2**

| ***Sample No.*** | **5** | **6** | **7** | **8** | **9** | **10** |
|---|---|---|---|---|---|---|
| Butyl Rubber | 100 | 60 | 45 | 30 | 15 | 0 |
| Synthetic Polyisoprene | 0 | 40 | 15 | 30 | 30 | 60 |
| Carbon Black | 57.5 | 0 | 0 | 0 | 0 | 0 |
| Polyamide¹ | 0 | 40 | 40 | 40 | 40 | 40 |
| Methylphenol Resin | 0 | 20 | 20 | 20 | 20 | 20 |
| Stannous Chloride | 0 | 0.8 | 0.8 | 0.8 | 0.8 | 0.8 |
| Relative Permeability² | 100 | 26 | 33 | 55 | 67 | 74 |

| | | | | | | |
|---|---|---|---|---|---|---|
| ¹ Elvamide® 8066 from DuPont, melting temperature reported as 115°C by ASTM D3418. ² Normalized to Sample 5, i.e. relative permeability = actual permeability/sample 5 value x 100; lower value is desired. | | | | | | |

As seen in Table 2, the presence of the polyamide as a disperse phase in the elastomeric phase results in an unexpectedly lower permeability as compared to a conventional butyl rubber compound.

### Example 3

In this example, the effect of dispersing a low melting polyamide in an innerliner compound containing butyl rubber is illustrated. The further effect of adding clay to the compound is also illustrated. All amounts are in parts by weight. The compound was formed, cured and tested following the procedures of Example 1.

**Table 3**

| ***Sample No.*** | **11** | **12** | **13** |
|---|---|---|---|
| Butyl Rubber | 100 | 60 | 60 |
| Carbon Black | 57.5 | 0 | 0 |
| Polyamide¹ | 0 | 40 | 40 |
| Methylphenol Resin | 0 | 20 | 20 |
| Stannous Chloride | 0 | 0.8 | 0.8 |
| Clay | 0 | 0 | 5 |
| Relative Permeability² | 100 | 31 | 24 |

| | | | |
|---|---|---|---|
| ¹ Elvamide® 8066 from DuPont, melting temperature reported as 115°C by ASTM D3418. ² Normalized to Sample 11, i.e. relative permeability = actual permeability/sample 11 value x 100; lower value is desired. | | | |

As seen in Table 3, the presence of the polyamide as a disperse phase in the elastomeric phase results in an unexpectedly lower permeability as compared to a conventional butyl rubber compound.

### Example 4

In this example, the effect of dispersing a low melting polyamide in an innerliner compound containing butyl rubber is illustrated. All amounts are in parts by weight. The compound was formed, cured and tested following the procedures of Example 1.

**Table 4**

| ***Sample No.*** | **14** | **15** | **16** |
|---|---|---|---|
| Butyl Rubber | 100 | 80 | 70 |
| Carbon Black | 57.5 | 0 | 0 |
| Polyamide¹ | 0 | 20 | 30 |
| Methylphenol Resin | 0 | 10 | 15 |
| Stannous Chloride | 0 | 0.8 | 0.8 |
| Relative Permeability² | 100 | 42 | 32 |

| | | | |
|---|---|---|---|
| ¹ Elvamide® 8066 from DuPont, melting temperature reported as 115°C by ASTM D3418. ² Normalized to Sample 14, i.e. relative permeability = actual permeability/sample 14 value x 100; lower value is desired. | | | |

As seen in Table 4, the presence of the polyamide as a disperse phase in the elastomeric phase results in an unexpectedly lower permeability as compared to a conventional butyl rubber compound.

### Example 5

In this example, the effect of dispersing a low melting polyamide in an innerliner compound containing butyl rubber is illustrated. The further effect of adding clay to the compound is also illustrated. All amounts are in parts by weight. The compound was formed, cured and tested following the procedures of Example 1.

**Table 5**

| ***Sample No.*** | **17** | **18** | **19** |
|---|---|---|---|
| Butyl Rubber | 100 | 80 | 70 |
| Carbon Black | 57.5 | 0 | 0 |
| Polyamide¹ | 0 | 20 | 30 |
| Methylphenol Resin | 0 | 10 | 15 |
| Stannous Chloride | 0 | 0.8 | 0.8 |
| Clay | 0 | 5 | 5 |
| Relative Permeability² | 100 | 32 | 19 |

| | | | |
|---|---|---|---|
| ¹ Elvamide® 8066 from DuPont, melting temperature reported as 115°C by ASTM D3418. ² Normalized to Sample 17, i.e. relative permeability = actual permeability/sample 17 value x 100; lower value is desired. | | | |

As seen in Table 5, the presence of the polyamide as a disperse phase in the elastomeric phase results in an unexpectedly lower permeability as compared to a conventional butyl rubber compound.

### Example 6

In this example, the effect of dispersing a low melting polyamide in an innerliner compound containing synthetic polyisoprene is illustrated. The further effect of adding clay to the compound is also illustrated. All amounts are in parts by weight. The compound was formed, cured and tested following the procedures of Example 1.

**Table 6**

| ***Sample No.*** | **20** | **21** | **22** |
|---|---|---|---|
| Butyl Rubber | 100 | 0 | 0 |
| Polyisoprene Rubber | 0 | 60 | 60 |
| Carbon Black | 57.5 | 0 | 0 |
| Polyamide¹ | 0 | 40 | 40 |
| Methylphenol Resin | 0 | 20 | 20 |
| Stannous Chloride | 0 | 0.8 | 0.8 |
| Clay | 0 | 0 | 5 |
| Relative Permeability² | 100 | 74 | 44 |

| | | | |
|---|---|---|---|
| ¹ Elvamide® 8066 from DuPont, melting temperature reported as 115°C by ASTM D3418. ² Normalized to Sample 20, i.e. relative permeability = actual permeability/sample 20 value x 100; lower value is desired. | | | |

As seen in Table 6, the presence of the polyamide as a disperse phase in the elastomeric phase results in an unexpectedly lower permeability as compared to a conventional butyl rubber compound.

### Example 7

In this example, the effect of dispersing a low melting polyamide in an innerliner compound containing synthetic polyisoprene is illustrated. All amounts are in parts by weight. The compound was formed, cured and tested following the procedures of Example 1.

**Table 7**

| ***Sample No.*** | **23** | **24** | **25** |
|---|---|---|---|
| Butyl Rubber | 100 | 0 | 0 |
| Polyisoprene Rubber | 0 | 80 | 70 |
| Carbon Black | 57.5 | 0 | 0 |
| Polyamide¹ | 0 | 20 | 30 |
| Methylphenol Resin | 0 | 10 | 15 |
| Stannous Chloride | 0 | 0.8 | 0.8 |
| Relative Permeability² | 100 | 89 | 244 |

| | | | |
|---|---|---|---|
| ¹ Elvamide® 8066 from DuPont, melting temperature reported as 115°C by ASTM D3418. ² Normalized to Sample 23, i.e. relative permeability = actual permeability/sample 23 value x 100; lower value is desired. | | | |

As seen in Table 7, the presence of the polyamide as a disperse phase in the elastomeric phase results in an unexpectedly lower permeability as compared to a conventional butyl rubber compound.

### Example 8

In this example, the effect of dispersing a low melting polyamide in an innerliner compound containing synthetic polyisoprene is illustrated. The further effect of adding clay to the compound is also illustrated. All amounts are in parts by weight. The compound was formed, cured and tested following the procedures of Example 1.

**Table 8**

| ***Sample No.*** | **26** | **27** | **28** |
|---|---|---|---|
| Butyl Rubber | 100 | 0 | 0 |
| Polyisoprene Rubber | 0 | 80 | 70 |
| Carbon Black | 57.5 | 0 | 0 |
| Polyamide¹ | 0 | 20 | 30 |
| Methylphenol Resin | 0 | 10 | 15 |
| Stannous Chloride | 0 | 0.8 | 0.8 |
| Clay | 0 | 5 | 5 |
| Relative Permeability² | 100 | 63 | 108 |

| | | | |
|---|---|---|---|
| ¹ Elvamide® 8066 from DuPont, melting temperature reported as 115°C by ASTM D3418. ² Normalized to Sample 26, i.e. relative permeability = actual permeability/sample 26 value x 100; lower value is desired. | | | |

As seen in Table 8, the presence of the polyamide as a disperse phase in the elastomeric phase results in an unexpectedly lower permeability as compared to a conventional butyl rubber compound.

### Example 9

In this example, the effect of dispersing a low melting polyamide in an innerliner compound containing synthetic polyisoprene and clay or natural rubber and clay is illustrated. All amounts are in parts by weight. The compound was formed, cured and tested following the procedures of Example 1.

**Table 9**

| ***Sample No.*** | **29** | **30** | **31** |
|---|---|---|---|
| Butyl Rubber | 100 | 0 | 0 |
| Polyisoprene Rubber | 0 | 60 | 0 |
| Natural Rubber | 0 | 0 | 60 |
| Carbon Black | 57.5 | 0 | 0 |
| Polyamide¹ | 0 | 40 | 40 |
| Methylphenol Resin | 0 | 20 | 20 |
| Stannous Chloride | 0 | 0.8 | 0.8 |
| Clay | 0 | 5 | 5 |
| Relative Permeability² | 100 | 28 | 33 |

| | | | |
|---|---|---|---|
| ¹ Elvamide® 8066 from DuPont, melting temperature reported as 115°C by ASTM D3418. ² Normalized to Sample 29, i.e. relative permeability = actual permeability/sample 29 value x 100; lower value is desired. | | | |

As seen in Table 9, the presence of the polyamide as a disperse phase in the elastomeric phase results in an unexpectedly lower permeability as compared to a conventional butyl rubber compound.

### Example 10

In this example, the effect of dispersing a low melting polyamide in an innerliner compound containing synthetic polyisoprene and clay or natural rubber and clay is illustrated. All amounts are in parts by weight. The compound was formed, cured and tested following the procedures of Example 1.

**Table 10**

| ***Sample No.*** | **32** | **33** | **34** |
|---|---|---|---|
| Butyl Rubber | 100 | 0 | 0 |
| Polyisoprene Rubber | 0 | 60 | 0 |
| Natural Rubber | 0 | 0 | 60 |
| Carbon Black | 57.5 | 0 | 0 |
| Polyamide¹ | 0 | 40 | 40 |
| Methylphenol Resin | 0 | 9 | 9 |
| Resorcinol | 0 | 2.4 | 2.4 |
| Hexamethylenetetramine² | 0 | 3.3 | 3.3 |
| Clay | 0 | 4.7 | 4.7 |
| Relative Permeability Air³ | 100 | 24 | 20 |
| Relative Permeability Rate O₂⁴ | 100 | 26 | 23 |

| | | | |
|---|---|---|---|
| ¹ Elvamide® 8066 from DuPont, melting temperature reported as 115°C by ASTM D3418. ² Hexamethoxymethylmelamine (HMMM) on a free flowing silica carrier at 72% activity (PPG's SC-72). ³ Normalized to Sample 32, i.e. relative permeability = actual permeability/sample 32 value x 100; lower value is desired. ⁴ Normalized to Sample 32 from MOCON oxygen diffusion test, i.e. relative permeability = actual permeability/sample 32 value x 100; lower value is desired. | | | |

As seen in Table 10, the presence of the polyamide as a disperse phase in the elastomeric phase with different compatibilizer, which is used a combination of hexamethylenetetramine- resorcinol, results in an unexpectedly lower permeability as compared to a conventional butyl rubber compound.

## Claims

1. A pneumatic tire comprising a carcass and an innerliner in direct contact with the carcass wherein the innerliner is co-vulcanized with the carcass, **characterized in that** the innerliner comprises a rubber composition comprising:
100 parts by weight of at least one elastomer; and
from 25 to 100 parts by weight, per 100 parts by weight of elastomer (phr) of a polyamide or nylon having a melting temperature of less than 160°C;
wherein the elastomer exists as a continuous phase and the polyamide or nylon is dispersed as a discontinuous phase in the elastomeric continuous phase.

2. The pneumatic tire of claim 1 wherein the concentration of the polyamide or nylon ranges from 40 to 70 phr.

3. The pneumatic tire of claim 1 or 2 wherein the elastomer is selected from the group consisting of butyl rubber, chlorobutyl rubber, bromobutyl rubber, natural rubber, and synthetic polyisoprene.

4. The pneumatic tire of at least one of the previous claims wherein the rubber composition further comprises from 1 to 10 phr of clay.

5. The pneumatic tire of at least one of the previous claims wherein the elastomer comprises natural rubber and the concentration of the polyamide or nylon ranges from 40 to 70 phr.

6. The pneumatic tire of at least one of the previous claims wherein the elastomer comprises natural rubber, the concentration of the polyamide or nylon ranges from 40 to 70 phr, and the rubber composition further comprises from 1 to 10 phr of clay.

7. The pneumatic tire of at least one of the previous claims wherein the rubber composition further comprises a compatibilizer.

8. The pneumatic tire of claim 7 wherein the rubber composition comprises a compatibilizer selected from phenol resin/metal salt pairs and methylene donor/methylene acceptor pairs.

9. The pneumatic tire of at least one of the previous claims wherein the polyamide or nylon has a melting temperature of less than 140°C.

10. The pneumatic tire of at least one of the previous claims wherein the polyamide or nylon has a melting temperature of less than 120°C.

## Patentansprüche

1. Luftreifen, umfassend eine Karkasse und eine Innenisolierung in direktem Kontakt mit der Karkasse, wobei die Innenisolierung mit der Karkasse covulkanisiert ist, **dadurch gekennzeichnet, dass** die Innenisolierung eine Kautschukzusammensetzung umfasst, umfassend:
100 Gewichtsteile mindestens eines Elastomers; und
25 bis 100 Gewichtsteile, je 100 Gewichtsteile Elastomer (ThK), eines Polyamids oder Nylons mit einer Schmelztemperatur von weniger als 160°C;
wobei das Elastomer als kontinuierliche Phase vorliegt und das Polyamid oder Nylon als diskontinuierliche Phase in der kontinuierlichen Elastomerphase dispergiert ist.

2. Luftreifen nach Anspruch 1, wobei die Konzentration des Polyamids oder Nylons sich auf 40 bis 70 ThK beläuft.

3. Luftreifen nach Anspruch 1 oder 2, wobei das Elastomer aus der Gruppe ausgewählt ist, bestehend aus Butylkautschuk, Chlorbutylkautschuk, Brombutylkautschuk, Naturkautschuk und synthetischem Polyisopren.

4. Luftreifen nach mindestens einem der vorgenannten Ansprüche, wobei die Kautschukzusammensetzung weiter 1 bis 10 ThK Ton umfasst.

5. Luftreifen nach mindestens einem der vorgenannten Ansprüche, wobei das Elastomer Naturkautschuk umfasst und die Konzentration des Polyamids oder Nylons sich auf 40 bis 70 ThK beläuft.

6. Luftreifen nach mindestens einem der vorgenannten Ansprüche, wobei das Elastomer Naturkautschuk umfasst, die Konzentration des Polyamids oder Nylons sich auf 40 bis 70 ThK beläuft und die Kautschukzusammensetzung weiter 1 bis 10 ThK Ton umfasst.

7. Luftreifen nach mindestens einem der vorgenannten Ansprüche, wobei die Kautschukzusammensetzung weiter einen Verträglichkeitsvermittler umfasst.

8. Luftreifen nach Anspruch 7, wobei die Kautschukzusammensetzung einen Verträglichkeitsvermittler umfasst, ausgewählt aus Phenolharz-/Metallsalz-Paaren und Methylendonator-/Methylenakzeptor-Paaren.

9. Luftreifen nach mindestens einem der vorgenannten Ansprüche, wobei das Polyamid oder Nylon eine Schmelztemperatur von weniger als 140° aufweist.

10. Luftreifen nach mindestens einem der vorgenannten Ansprüche, wobei das Polyamid oder Nylon eine Schmelztemperatur von weniger als 120° aufweist.

## Revendications

1. Bandage pneumatique comprenant une carcasse et un calandrage intérieur en contact direct avec la carcasse, dans lequel le calandrage intérieur est covulcanisé avec la carcasse, **caractérisé en ce que** le calandrage intérieur comprend une composition de caoutchouc comprenant :
à concurrence de 100 parties en poids, au moins un élastomère ; et
à concurrence de 25 à 100 parties en poids, par 100 parties en poids d'élastomère (phr), un polyamide ou un nylon possédant une température de fusion inférieure à 160 °C ;
dans lequel l'élastomère est présent sous la forme d'une phase continue et le polyamide ou le nylon est dispersé sous la forme d'une phase discontinue dans la phase élastomère continue.

2. Bandage pneumatique selon la revendication 1, dans lequel la concentration du polyamide ou du nylon se situe dans la plage de 40 à 70 phr.

3. Bandage pneumatique selon la revendication 1 ou 2, dans lequel l'élastomère est choisi parmi le groupe constitué par du caoutchouc butyle, du caoutchouc chlorobutyle, du caoutchouc bromobutyle, du caoutchouc naturel et du polyisoprène synthétique.

4. Bandage pneumatique selon au moins une des revendications précédentes, dans lequel la composition de caoutchouc comprend en outre de l'argile à concurrence de 1 à 10 phr.

5. Bandage pneumatique selon au moins une des revendications précédentes, dans lequel l'élastomère comprend du caoutchouc naturel et la concentration du polyamide ou du nylon se situe dans la plage de 40 à 70 phr.

6. Bandage pneumatique selon au moins une des revendications précédentes, dans lequel l'élastomère comprend du caoutchouc naturel, la concentration du polyamide ou du nylon se situe dans la plage de 40 à 70 phr et la composition de caoutchouc comprend en outre de l'argile à concurrence de 1 à 10 phr.

7. Bandage pneumatique selon au moins une des revendications précédentes, dans lequel la composition de caoutchouc comprend en outre un agent de compatibilité.

8. Bandage pneumatique selon la revendication 7, dans lequel la composition de caoutchouc comprend un agent de compatibilité choisi parmi des paires de résine phénolique/sel métallique et des paires de donneur de méthylène/accepteur de méthylène.

9. Bandage pneumatique selon au moins une des revendications précédentes, dans lequel le polyamide ou le nylon possède une température de fusion qui est inférieure à 140 °C.

10. Bandage pneumatique selon au moins une des revendications précédentes, dans lequel le polyamide ou le nylon possède une température de fusion qui est inférieure à 120 °C.
